# EUROPEAN PATENT APPLICATION

(11) **EP 1 168 212 A1**
(43) Date of publication of application: **02.01.2002**
(21) Application number: 01107743.5
(22) Date of filing: 02.04.2001
(51) Int. Cl.: G06F 17/60

(54) **Assets management method and system**

(30) Priority: 30.06.2000 JP 2000199276
(71) Applicant: Numerical Technologies, Kabushiki Kaisha, Tokyo (JP)
(72) Inventor: Torii, Hideyuki, Numerical Technologies K.K., Bunkyo-ku, Tokyo (JP)
(74) Representative: HOFFMANN - EITLE

(57) **Abstract**

An assets management method and system for enabling low-cost, highly-flexible, highly-reliable, efficient and safe assets risk management and earnings management, for geographically distributed users or managed assets data. Assets risk management and earnings management are performed for geographically distributed users and managed assets data based on different methods and/or standards for the respective users or managed assets, by utilizing inter-network communication typified by the Internet connection where the band is limited and the reliability and safety are poor. Data transmitted between a risk and earnings management apparatus provided in a central position and geographically distributed user terminals is compressed, encrypted, and provided with authentication key for each user or managed assets. The result of output based on the different methods and/or standards for respective users or managed assets is sent from the risk and earnings management apparatus to the user terminal.

## Description

### FIELD OF THE INVENTION

The present invention relates to an assets management method and system for enabling efficient and safe assets risk management and earnings management for geographically distributed users and managed assets data.

### BACKGROUND OF THE INVENTION

In the conventional methods and systems for this purpose, to realize assets risk management and earnings management, an input data manager which manages assets input data, a calculation processor which obtains the result of calculation from the input data, an output data manager which stores and searches for the result of calculation, and a user interface which provides an actual function to a user, are integrated into one system, these units are mutually closely connected as a network. In these systems, only a small scale of assets can be managed.

To avoid the risk of leakage of secret financial data including customer information, credit information and the like, the purpose of such system is limited to use within a company or analysis of low sensitive information.

However, recently, there is a need to provide risk management and earnings management functions for major corporations having a large amount of data and assets in scale of financial institutions, and to respond to the need, a broad-band and high-reliable inter-network communication must be implemented.

To satisfy the need, in the conventional systems, in case of geographically distributed users and assets data, the network communication typified by the Internet access can be made at a low cost, but due to limitation of band or low reliability, the communication cannot be utilized without difficulty.

Further, if a portfolio logic, including various theories and different approaches such as value-at-risk (VaR), risk return analysis and portfolio optimization, is applied to the conventional systems, it is difficult to independently provide different methods and/or standards to respective users or managed assets.

Further, in the conventional systems, in a case where functional improvement or revision is continuously made, the device or software on the user terminal side must be changed. Once the system is brought into operation, the functional change cannot be easily made, and therefore, the change increases the maintenance cost.

### SUMMARY OF THE INVENTION

The present invention has been made to remove the drawbacks of the above conventional art, and has its object to provide an assets management method and system for enabling low-cost, highly-flexible, highly-reliable, efficient and safe assets risk management and earnings management, for geographically distributed users or managed assets data.

According to the present invention, the foregoing object is attained by providing an assets management method comprising the steps of: managing access of users to resources by providing history authentication management means for managing histories for users or managed assets and performing authentication management, in a risk and earnings management apparatus which generates data on risk management and earnings management by calculating input assets data; and enabling an unlimited number of users to access the risk and earnings management apparatus via a network.

The history authentication management means provides authorization to utilize the resources in the risk and earnings management apparatus based on user or managed assets.

Further, data transmitted between the user and the risk and earnings management apparatus via the network is encrypted for security purposes.

Further, the foregoing object is attained by providing an assets management system including a risk and earnings management apparatus which generates data on risk management and earnings management by calculating input assets data and a user terminal which accesses the risk and earnings management apparatus via a network, comprising: history authentication management means, provided in the risk and earnings management apparatus, for managing histories for users or managed assets and performing authentication management, thereby managing access of user resources, wherein an unlimited number of users are enabled to access the risk and earnings management apparatus via a network.

Note that the history authentication management means provides authorization to utilize the resources in the risk and earnings management apparatus based on user or managed assets. Further, data transmitted between the user and the risk and earnings management apparatus via the network is encrypted in accordance with level of security desired.

Further, the foregoing object is attained by providing a risk and earnings management method comprising: data management means for storing and searching for input/output data for respective users or managed assets; calculation processing means for processing the input data and obtains output data; history authentication management means for managing histories for the users or managed assets and performing authentication management; and network connection management means for performing flow control, data encryption and data compression/decompression.

Note that the history authentication management means provides authorization to utilize the resources in the risk and earnings management apparatus based on user or managed assets. Further, the network connection management means encrypts data transmitted between the user and the risk and earnings management apparatus via the network in accordance with level of security desired.

Further, the foregoing object is attained by providing an computer-readable storage medium holding a control program for controlling a risk and earnings management apparatus which generates data on risk management and earnings management by calculating input assets data, wherein the control program comprising: a data management program for storing and searching for input/output data for respective users or managed assets; a calculation processing program for processing the input data and obtains output data; a history authentication management program for managing histories for the users or managed assets and performing authentication management; and a network connection management program for performing flow control, data encryption and data compression/decompression. The history authentication management program includes a step of providing authorization to utilize the resources in the risk and earnings management apparatus based on user or managed assets. Further, the network connection management program includes a step of encrypting data transmitted between the user and the risk and earnings management apparatus via the network in accordance with level of security desired.

The present invention as described above provides a method for enabling the user to control the system, to perform data input/output and display the result of processing.

Further, the present invention provides versatility and security for input/output of large amount of data even in use of small-capacity line, by compressing and encrypting data transmitted between the system and the user terminal, and assigning an authentication key to each user or managed assets.

Further, the present invention provides memory areas to respective users or managed assets, extracts and provides output results based on methods and/or standards depending on the respective users or managed assets.

Further, the present invention realizes simple functional revision and low maintenance cost by providing a management apparatus, not on the side of geographically distributed or plural users, but in a centralized location.

As described above, according to the present invention, efficient and safe assets risk management and earnings management can be realized even for geographically distributed users and managed assets data.

Accordingly, assets risk management and earnings management can be realized via a low-cost network line for e.g. the Internet access even for major corporations having a large amount of data and financial institutions handling secret financial data including customer information and credit information.

Further, in a case where a portfolio logic, including various theories and different approaches such as value-at-risk (VaR), risk return analysis and portfolio optimization, are employed, functions based on different methods and/or standards can be independently provided to the respective users or managed assets as if different systems are operated, based on history authentication information for the respective user or managed assets.

In addition, in a case where functional improvement and revision are continuously made, correction can be made on the side of centralized risk and the earnings management apparatus side while keeping the graphically distributed user terminals unchanged. Accordingly, the costs of functional maintenance and revision can be reduced.

Other features and advantages of the present invention will be apparent from the following description taken in conjunction with the accompanying drawings, in which like reference characters designate the same name or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing an example of the configuration of an assets management system according to an embodiment of the present invention;
Fig. 2 is a block diagram showing an example of the hardware construction of the assets management system according to the embodiment;
Fig. 3 is an explanatory view showing an example of the construction of a history authentication key DB according to the embodiment;
Fig. 4 is a block diagram showing an example of the construction of a data management DB according to the embodiment;
Fig. 5 is a schematic diagram showing an example of the construction of a calculation processing program according to the embodiment;
Fig. 6 is a flowchart showing an example of a processing procedure in a risk and earnings management apparatus according to the embodiment;
Fig. 7 is a flowchart showing an example of a processing procedure of history authentication processing in Fig. 6; and
Fig. 8 is a flowchart showing an example of a processing procedure of calculation processing in Fig. 6.

### DETAILED DESCRIPTION OF THE PREFERRED EMBODIMENT

A preferred embodiment of the present invention will now be described in detail in accordance with the accompanying drawings.

### <Example of Configuration of Assets Management System of Present Embodiment>

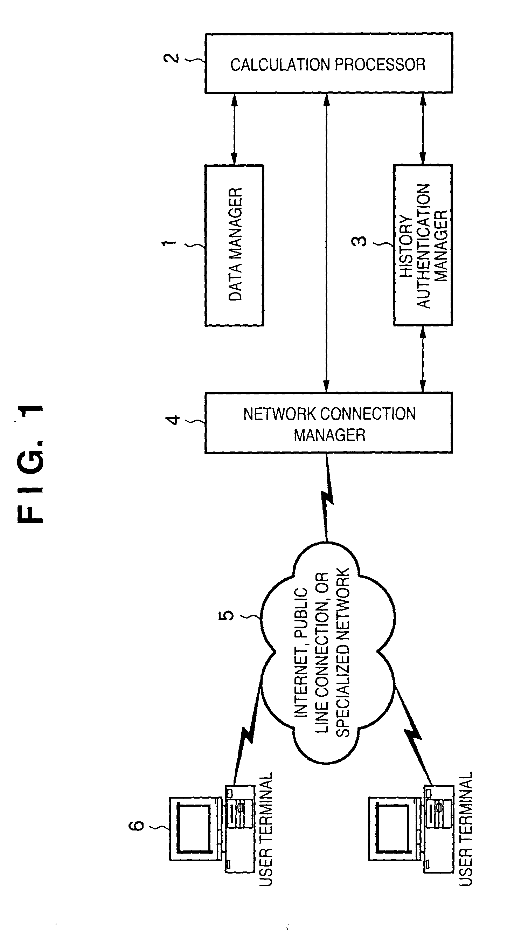

Fig. 1 is a block diagram showing an example of the system configuration according to an embodiment of the present invention.

In Fig. 1, reference numeral 1 denotes a data manager which stores and searches for input/output data for each user or managed assets; 2, a calculation processor which processes input data from the data manager 1 and a network and obtains output data; 3, a history authentication manager which manages a history for each user or managed assets and performs authentication management; and 4, a network connection manager which performs flow control, data encryption/decryption and data compression/decompression. The data manager 1, the calculation processor 2, the history authentication manager 3 and the network connection manager 4 construct a risk and earnings management apparatus. Note that in the present example, the respective elements constructing the risk and earnings management apparatus are connected to the network connection manager 4, however, the data manager 1, the calculation processor 2 and the history authentication manager 3 may be distributed on the network or connected via private network such as a LAN.

Numeral 5 denotes a network line, connecting geographically distributed plural users or managed assets data, including the Internet, a public line or specialized network; and 6, a user terminal which controls the system to input/output data and display the result of processing. It may be arranged such that plural user terminals 6 are geographically distributed. That is, as the user terminal 6 may exist in a financial institution or may be used for private use, anybody can enter the present system.

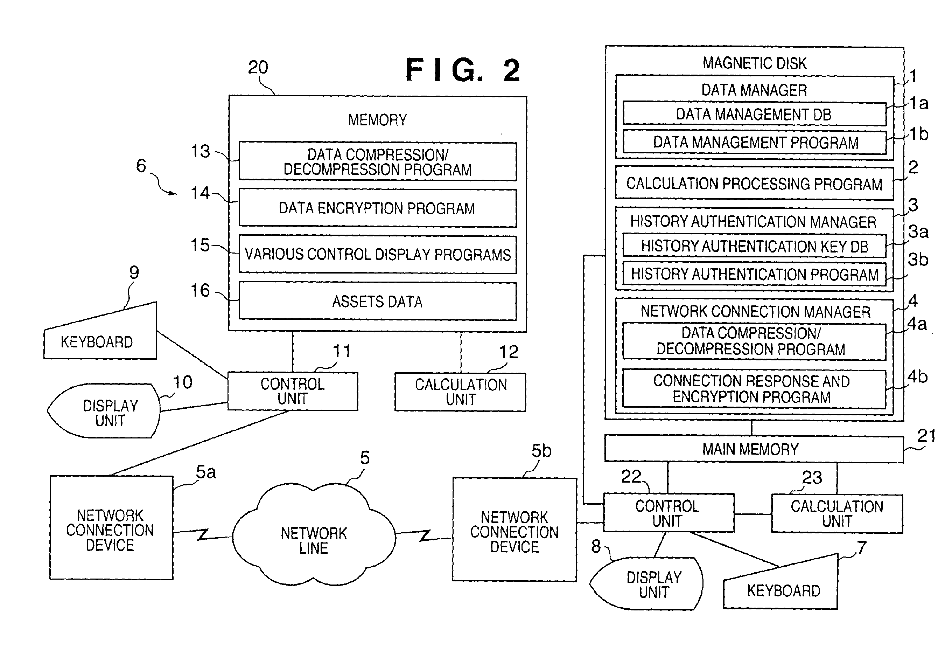

Fig. 2 is a block diagram showing an example of the hardware construction to realize the present system as above. In Fig. 2, elements corresponding to those in Fig. 1 have the same reference numerals.

In Fig. 2, numeral 1 denotes the data manager including a data management database (DB) 1a holding assets data, managed for respective users and/or managed assets, and a data management program 1b; 2, a calculation processing program corresponding to the calculation processor 2, which calculates assets variation; 3, the history authentication manager including a history authentication key database (DB) 3a holding histories and authentication keys in correspondence with users, and a history authentication program 3b which performs history authentication; and 4, the network control manager including a data compression/decompression program 4a which compresses data transmitted via the network and decompresses received data and a connection response and encryption program 4b which performs data encryption/decryption. These data and programs are stored in a large capacity storage, i.e., a magnetic disk such as a hard disk or a floppy disk, an optical disk such as a CD-ROM, a CD-RW or a DVD, a memory card, or the like, and loaded to a main memory 21 and executed.

On the risk and earnings management apparatus side, numeral 7 denotes a keyboard for operations to start/stop/monitor the risk and earnings management apparatus; 8, a display unit which displays the status of the risk and earnings management apparatus in accordance with an operation at the keyboard 7; 21, the main memory used for storing data and programs loaded from the above-described storage or used as a temporary memory for the calculation processing; 22, a control unit which controls the overall risk and earnings management apparatus in accordance with the program loaded to the main memory 21; and 23, a calculation unit which performs specific calculation at high speed in accordance with the calculation program 2. Note that in a general computer, the control unit 22 and the calculation unit 23 are realized by one CPU, while in a specialized computer, these units are realized by plural CPUs for parallel operations.

Numeral 5 denotes a network line. On the user terminal 6 side, a network connection device 5a is provided, and on the risk and earnings management apparatus side, a network connection device 5b is provided.

In the user terminal 6, numeral 9 denotes a keyboard of the user terminal, for command operations to perform calculation of value-at-risk (VaR), risk return analysis, portfolio optimization and the like, and to perform data transfer, reference to result and the like, to the risk and earnings management apparatus side, or for input of authentication data and the like; 10, a display unit of the user terminal which displays responses returned from the risk and earnings management apparatus in response to an operation at the keyboard 7 and the result of analysis processing by various control display programs 15; 11, a control unit which controls the overall user terminal 6; and 12, a calculation unit which performs various calculation processings on the user terminal. Note that it is preferable that the user terminal 6 be a general purpose computer such that anybody can enter the present system. Generally, the control unit 11 and the calculation unit 12 are realized as one CPU.

Numeral 20 denotes a memory holding the following data and programs. Numeral 13 denotes a data compression/decompression program which compresses and decompresses data transmitted/received through the network line 5 between the memory and the network connection manager 4 of the risk and earnings management apparatus; 14, a data encryption program which encrypts the data transmitted/received through the network line 5 between the memory and the network connection manager 4 of the risk and earnings management apparatus; 15, the various control display programs for various control displays on the user terminal; and 16, an assets data memory for temporarily storing data before the data is sent via the network line 5 to the data manager 1.

### <Example of History Authentication Construction>

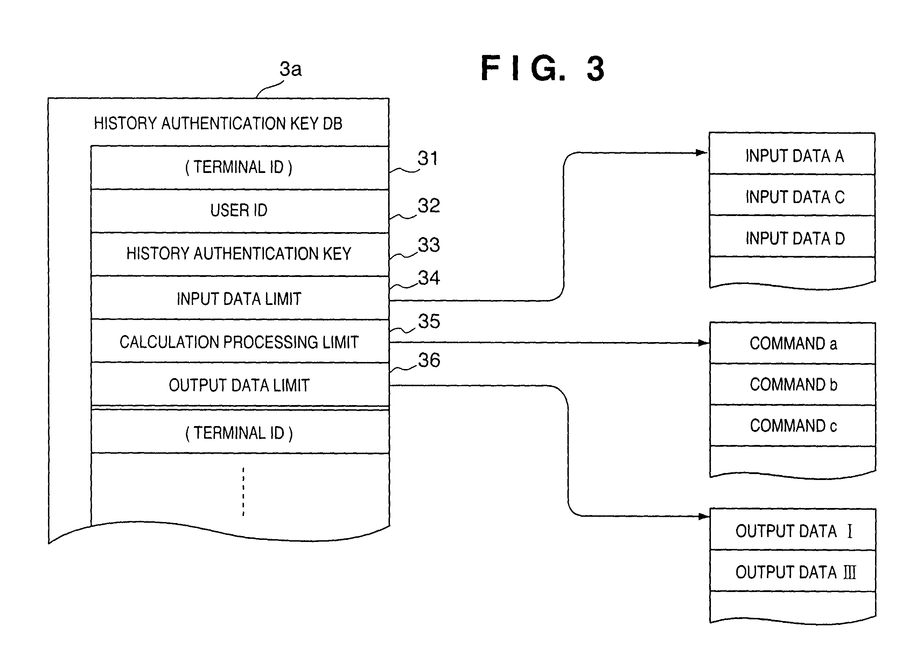

Fig. 3 shows an example of the construction of the history authentication key DB 3a.

Data transmitted by the user terminal 6 includes at least a terminal ID, a user ID (including a password and the like) and a history authentication key, and based on these IDs and key, terminal IDs 31, user IDs 32 and history authentication keys 33 of the history authentication key DB 3a are searched so as to find matches. If no match is found, the risk and earnings management apparatus does not receive a request from the user terminal 6. If there are matches, the sources and services that the user can utilize are limited based on an input data limit 34, a calculation processing limit 35 and an output data limit 36. For example, the limitation may be determined based on whether the request is made from the same financial institution or another financial institution or a private customer, and further, in case of customer, based on the volume of business, the period of business and the like. Note that regarding the terminal ID, in case of widening the range of use, it is preferable that the ID is not included in authentication.

In Fig. 3, input data A, C and D are used, and use of data B is limited. In the calculation processing, commands a, b and d are processed but a command c is not processed. Among the results of calculation, output data I and III are outputted (returned to the user terminal) but output data II is not outputted. Note that if it is arranged such that especially commands are hierarchically limited with limitation by dividing one processing method for plural commands, and by selecting one processing method from plural processing methods or selecting one specific processing method in correspondence with input data or output format, a system can be constructed with greater general versatility. Further, in a case where a required processing method does not exist, if it is arranged such that another system having the processing method is found, and the present risk and earnings management apparatus, as a user terminal, accesses the other system to obtain the result of calculation, a more general system sharing the resources can be constructed. In this case, the attainment of security by history authentication of the present invention becomes a more important function.

Note that in Fig. 3, the input data, commands and the output data are clearly separated for the purpose of simplification, however, a method of constructing a hierarchical structure and control use of levels of the structure, a method of controlling masking/not masking a part of data can be performed, and regarding command processing, control by argument, i.e., control by the difference of parameter or branch destination used in the program, can be performed. Further, a limit of the number of significant digits of data, a limit of the width of convergence in calculation, and a limit by replacing a part of data with blank or omission upon output, can be made. In the present embodiment, the use of resources and services are limited in correspondence with user in consideration of a possibility that sensitive data such as corporation secret and customer secret are handled via the Internet or the like when the present system is publicized. The range of publicity can be widened with increase in reliability of the security.

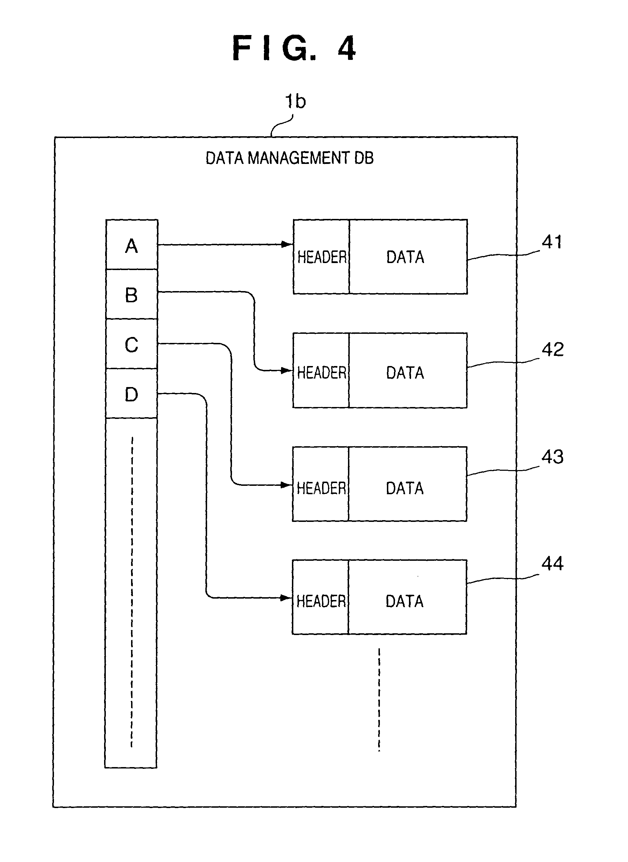

Fig. 4 is a block diagram schematically showing an example of the construction of the data management database (DB) 1b for input data management. Numerals 41 to 44 denote contents of input data A to D. Note that the input data is not always clearly separated as shown in the figure, but generally, the input data A to D overlap each other. Actually, the database is hierarchically structured or indexed in a complicated manner. Although Fig. 4 does not show output data as the results of calculation, the output data is stored in the data management database (DB) 1b, and thereafter, the data is also used as input data. In this case, all the necessary data are stored regardless of the limit of output data in Fig. 3.

As shown in Fig. 4, the data areas 41 to 44 respectively have a header and data. In the header, as a history authentication key, when, who registered this data, or whom the user can show the data security level or the data, or whom the user cannot show the security level or the data, are described upon registration or update. The key increases the security in cooperation with the above input limits in Fig. 3. Note that it may be arranged such that one of the history authentication keys in Figs. 3 and 4 is used in correspondence with the security of the database.

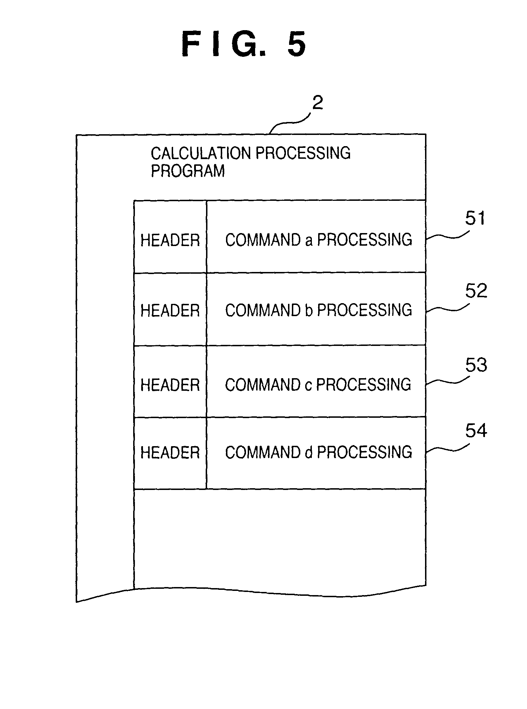

Fig. 5 is a schematic diagram showing an example of the construction of the calculation processing program 2.

Fig. 5 shows command a processing 51 to command d processing 54. As in the case of Fig. 4, the command processing programs 51 to 54 respectively have a header where conditions of use of processing program, processing precision upon use and information on processing method are described.

Note that the limitation of the calculation processing in Fig. 3 is an example, and the calculation processing program 2 is not necessarily limited in correspondence with the command. For example, the limitation is indicated by the arguments of the respective programs, and the number of calculations in the Monte Carlo method or the like is limited. As a particular example of the program argument control, a Monte Carlo method in conformity with discrete probability density function and a Monte Carlo method in conformity with continuous probability density function are prepared and users or the range of both methods are limited by the program arguments.

Further, in Fig. 3, all the input data, the calculation processing and the output data are limited, however, it may be arranged such that only the output data is limited and all the necessary input and calculation are performed inside and the results are stored in the data management database (DB) 1b. In this case, the output data returned to the user terminal is masked in accordance with limitations. For example, if data where a company name, a customer name or non-presentable data is replaced with omission, and the data returned to be displayed, business effects can be expected.

### <Example of Operation of Assets Management System of Present Embodiment>

Hereinbelow, an example of the operation of assets management system according to the present embodiment will be described. Note that the operation at the user terminal 6, transaction via the network, the data compression and encryption and the like are not main parts of the present invention, and therefore detailed description about them will be omitted.

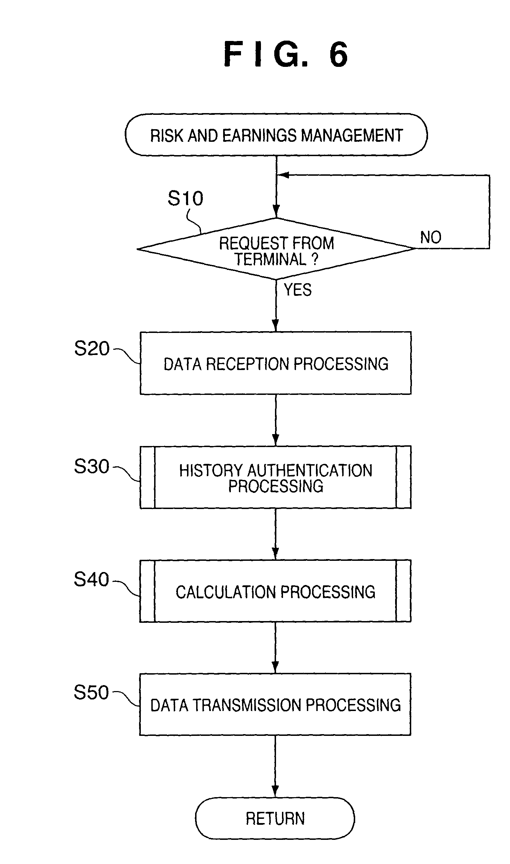

Fig. 6 is a flowchart showing the entire processing in the risk and earnings management apparatus according to the present embodiment.

The risk and earnings management apparatus waits for a request from the user terminal 6 at step S10. Upon reception of request, data from the user terminal 6 is received at step S20. At this time, primary authentication of the terminal and the user, data decryption and decompression and the like are also performed. Note that it is preferable that one of several different types of encryption is performed in correspondence with security, or plural encryption are performed on high secret data based on the content of data. Especially, assets data must be prevented from leaking to the outside, accordingly, the most strict encryption is performed on the assets data with the company name and the customer name. Similarly, the most strict encryption is performed on risk and earnings management data to be returned.

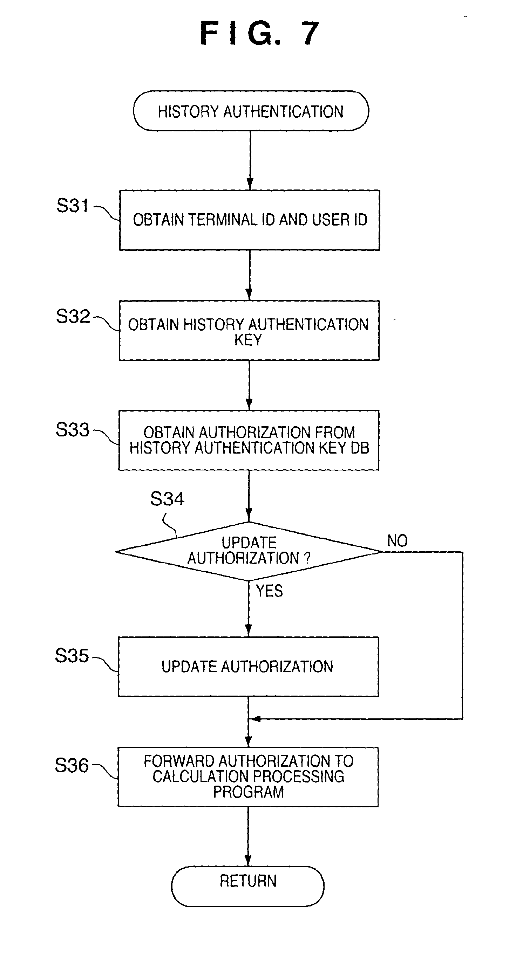

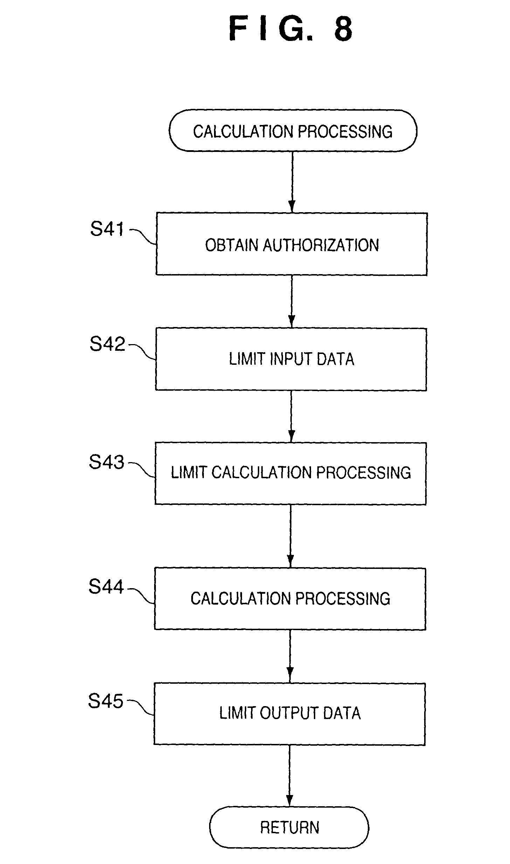

At step S30, history authentication processing to be described with reference to Fig. 7 is performed. In the history authentication processing, the above-described limitation in correspondence with user is made. At step S40, input data and/or processing command are processed based on the limitation, and calculation processing is performed to obtain risk variation and earnings as shown in Fig. 8. At step S50, risk variation and earnings management data as the result of calculation is returned by the risk and earnings management apparatus to the user terminal 6. The user terminal 6 displays the risk and earnings management data. Note that the format of display may be downloaded by the risk and earnings management apparatus to the user terminal 6 (in this case, the above limitation in correspondence with user is also applied to the display format) or may be uniquely developed on the user terminal side.

Fig. 7 is a flowchart showing an example of the history authentication processing at step S30 in Fig. 6.

First, at step S31, the terminal ID and the user ID are obtained from the data sent from the user terminal 6. As described above, the terminal ID is not used in many cases. Next, at step S32, the history authentication key is obtained. At step S33, based on the obtained terminal ID, the user ID and the history authentication key, the "authorization" of the user is determined (See Fig. 3). At step S34, it is determined whether or not the obtained "authorization" is to be changed, and if NO, the process jumps to step S36, at which data indicating the "authorization" is forwarded to the calculation processing program. If it is determined at step S34 that the "authorization" is to be changed, the "authorization" is changed at step S35, and the changed "authorization" is forwarded to the calculation processing program at step S36. Note that the "authorization" can be changed at any time in correspondence with a slight change based on the relation among financial institutions, a change in business amount, the period of business and the like. Accordingly, the "authorization" may be limited due to the degradation of credit level. Further, it may be arranged such that the "authorization" is fixed to the user ID or history authentication key, and the user ID or history authentication key is changed upon renewal of contract.

Fig. 8 is a flowchart showing an example of the calculation processing at step S40 in Fig. 6. In this example, all the input data, calculation processing and output data are limited.

First, at step S41, the "authorization" data as the result at step S30 is obtained. At step S42, the input data is limited in accordance with the "authorization" data. At step S43, the calculation processing is limited in accordance with the "authorization" data. At step S44, the calculation processing is performed to obtain the assets variation and the risk management data within the limitation of the input data and the calculation processing. At step S45, information is selected or masked by the result of calculation in accordance with the "authorization" data, and the information is outputted.

As many apparently widely different embodiments of the present invention can be made without departing from the spirit and scope thereof, it is to be understood that the invention is not limited to the specific embodiments thereof except as defined in the appended claims.

## Claims

1. An assets management method comprising the steps of:
managing access of user resources by providing history authentication management means for managing histories for users or managed assets and performing authentication management, in a risk and earnings management apparatus which generates data on risk management and earnings management by using input assets data; and
enabling an large number of users to access said risk and earnings management apparatus via a network.

2. The assets management method according to claim 1, wherein said history authentication management means provides authorization to utilize the resources in the risk and earnings management apparatus based on user or managed assets.

3. The assets management method according to claim 1, wherein data transmitted between said user and said risk and earnings management apparatus via the network is encrypted in accordance with level of security desired.

4. An assets management system including a risk and earnings management apparatus which generates data on risk management and earnings management by calculating input assets data and a user terminal which accesses said risk and earnings management apparatus via a network, comprising:
history authentication management means, provided in said risk and earnings management apparatus, for managing histories for users or managed assets and performing authentication management, thereby managing access of user resources,
wherein an unlimited number of users are enabled to access said risk and earnings management apparatus via a network.

5. The assets management system according to claim 4, wherein said history authentication management means provides authorization to utilize the resources in the risk and earnings management apparatus based on user or managed assets.

6. The assets management system according to claim 4, wherein data transmitted between said user and said risk and earnings management apparatus via the network is encrypted in accordance with level of security desired.

7. A risk and earnings management apparatus comprising:
data management means for storing and searching for input/output data for respective users or managed assets;
calculation processing means for processing the input data and obtains output data;
history authentication management means for managing histories for the users or managed assets and performing authentication management; and
network connection management means for performing flow control, data encryption and data compression/decompression.

8. The risk and earnings management apparatus according to claim 7, wherein said history authentication management means provides authorization to utilize the resources in the risk and earnings management apparatus based on user or managed assets.

9. The risk and earnings management apparatus according to claim 7, wherein said network connection management means encrypts data transmitted between said user and said risk and earnings management apparatus via the network in accordance with level of security desired.

10. A computer-readable storage medium holding a control program for controlling a risk and earnings management apparatus which generates data on risk management and earnings management by calculating input assets data,
wherein said control program comprising:
a data management program for storing and searching for input/output data for respective users or managed assets;
a calculation processing program for processing the input data and obtains output data;
a history authentication management program for managing histories for the users or managed assets and performing authentication management; and
a network connection management program for performing flow control, data encryption and data compression/decompression.

11. The storage medium according to claim 10, wherein said history authentication management program includes a step of providing authorization to utilize the resources in the risk and earnings management apparatus based on user or managed assets.

12. The storage medium according to claim 10, wherein said network connection management program includes a step of encrypting data transmitted between said user and said risk and earnings management apparatus via the network in accordance with level of security desired.
